# EUROPÄISCHE PATENTANMELDUNG

(11) **EP 0 873 725 A2**
(43) Veröffentlichungstag der Anmeldung: **28.10.1998**
(21) Anmeldenummer: 98710005.4
(22) Anmeldetag: 20.03.1998
(51) Int. Cl.: A61C 11/08

(54) **Anordnung zum lösbaren Verbinden eines Modells an einem Sockel sowie Sockelplatte**

(30) Priorität: 22.03.1997 DE 29705261 U; 13.11.1997 DE 29720091 U
(71) Anmelder: Barget, Rudolf, 63549 Ronneburg (DE); Deusser, Horst-Dieter, 60439 Frankfurt (DE)
(72) Erfinder: Barget, Rudolf, 63549 Ronneburg (DE); Deusser, Horst-Dieter, 60439 Frankfurt (DE)
(74) Vertreter: Stoffregen, Hans-Herbert, Dr. Dipl.-Phys.

(57) **Zusammenfassung**

Die Erfindung bezieht sich auf eine Anordnung zum lösbaren Verbinden bzw. Fixieren von zahntechnischen Gipssockeln (12, 28), insbesondere zum Einartikulieren eines Modells, wobei in sockelseitiger Fläche des Modells ein Magnet (32) und in modellseitiger Fläche des Sockels ein von dem Magneten gehaltenes Gegenelement (34) wie Konterscheibe oder -ring oder zweiter Magnet anordbar sind. Um u.a. eine Wiederverwendbarkeit des Magneten bzw. Gegenelements zu ermöglichen, wird vorgeschlagen, dass der Magnet und/oder das Gegenelement entfernbar in einer aus Kunststoff bestehenden Verkapselung (36, 37) angeordnet sind.

## Beschreibung

Die Erfindung bezieht sich auf eine Anordnung zum lösbaren Verbinden bzw. Fixieren von zahntechnischen Gipssockeln, insbesondere zum Einartikulieren eines Modells an einem Sockel, wobei in sockelseitiger Fläche des Modells ein Magnet und in modellseitiger Fläche des Sockels ein von dem Magneten gehaltenes Gegenelement wie Konterscheibe oder -ring oder zweiter Magnet angeordnet sind oder umgekehrt.

Ferner bezieht sich die Erfindung auf eine Sockelplatte zur Herstellung eines Sägemodells bestehend aus einem Zahnkranz und einem Modellsockel mit von dem Zahnkranz ausgehenden und unterseitig über den Zahnkranz vor Ausbildung des Modellsockels vorstehenden Modellstiften.

Beim Einartikulieren von Modellen in einem Artikulator werden Magnetsysteme benutzt, die den Halt der Modelle an einem Gipssockel bzw. einer Artikulatorplatte, die zusammen auch als Artikulationssockel bezeichnet werden können, sicherstellen.

Da sowohl der Magnet als auch das zugeordnete Gegenelement wie Konterscheibe bzw. -ring Feuchtigkeit ausgesetzt sind, treten unerwünschte Korrosionen auf. Des Weiteren ist eine Wiederverwendung der Magnet- bzw. Metallteile nur schwerlich möglich, da die Teile in dem Modell bzw. dem Sockel eingegossen sind und ein Entfernen folglich zu einer Beschädigung des Modells führt. Da dieses jedoch archiviert werden muss, wird wegen der Gefahr des Zerstörens ein Entfernen des Magneten häufig unterlassen.

Sollen die Gipsteile recycelt werden, so bereiten die vorhandenen Metallteile Probleme, da hierdurch die Zähne eines Zerkleinerers beschädigt werden können.

Aus dem DE 92 16 164 U1 ist ein Plattensatz zum Gleichschalten unterschiedlicher Artikulatoren bekannt, wobei eine Artikulatorplatte einen herausnehmbaren Magneten aufweist.

Zur Herstellung von Zahnersatz müssen von Abdrücken von Ober- und Unterbiss Modelle hergestellt werden, die sodann in einen Artikulator eingesetzt werden. Für die Herstellung des Zahnersatzes selbst werden Zähne bzw. Zahnstümpfe aus dem Sägemodell gelöst und müssen wieder eingesetzt werden. Hierzu wird das Sägemodell in einzelne Segmente zerlegt. Zur Halterung des Sägemodells bzw. der Zähne und der Zahnstümpfe gehen von diesen Modellstifte (Pins) aus, die unterseitig über das Sägemodell vorstehen. Anschließend wird das Sägemodell mit den Stiften auf die Sockelplatte aufgesetzt, um den Zwischenraum mit Gips auszugießen (Modell sockel).

Damit jedoch nach dem Aufsägen des Sägemodells die Zähne bzw. Zahnstümpfe herausgelöst werden können, werden diese durch Krafleinwirkung auf die Modellstifte herausgedrückt. Hierzu müssen die Modellstifte endseitig freigelegt sein. Da diese vollständig von Gips umgeben sind, werden die Modellstifte freigebohrt, um die Enden freizulegen.

Der vorliegenden Erfindung liegt u. a. das Problem zugrunde, eine Anordnung der eingangs genannten Art so weiterzubilden, dass ein problemloses Entfernen und Wiederverwenden der das Modell an dem Gipssockel bzw, der Artikulatorplatte haltenden und fixierenden Metallteile erfolgen kann. Auch soll eine Sockelplatte der eingangs genannten Art so weitergebildet werden, dass mit einfachen Maßnahmen die Modellstifte endseitig zugänglich sind, ohne dass ein Freibohren oder ähnliches erforderlich ist.

Hinsichtlich der Anordnung wird das Problem im Wesentlichen dadurch gelöst, dass der Magnet- und/oder das Gegenelement entfernbar in einer aus Kunststoff bestehenden Verkapselung angeordnet sind. Insbesondere ist dabei der Magnet in einer im Schnitt einem Hutprofil gleichkommenden Aufnahme anordbar und gegebenenfalls in dieser festklemmbar, die mit einem ersten Deckelelement verschließbar ist, das seinerseits bei verkapseltem Magneten während des Abbindens des Gipses außenseitig fluchtend oder nahezu fluchtend zur sockel- bzw. modellseitigen Fläche des Modells bzw. des Sockels verläuft. Nach ausgehärtetem Gips oder sonstigem geeignetem Material kann das erste Deckelelement entfernt und durch ein zweites Deckelelement ersetzt werden, das zur sockel- bzw. modellseitigen Außenfläche zurückversetzt verläuft.

Entsprechend ist das Gegenelement wie Konterscheibe oder -ring oder zweiter Magnet in einer Verkapselung aufgenommen, die ihrerseits aus einem Aufnahmeteile und einem Deckelteil besteht, dessen außenseitige Bodenfläche - zumindest während des Abbindens - ebenfalls fluchtend oder nahezu fluchtend zur modell- bzw. sockelseitigen Fläche des Sockels bzw. Modells verläuft. Das Deckelteil kann sodann ebenfalls durch ein anderes Deckelteil zur Erzielung zuvor beschriebenen Verlaufs ausgetauscht werden.

Erfindungsgemäß wird eine Verkapselung vorgeschlagen, die einerseits in dem Modell bzw. dem Sockel eingießbar ist und den Magneten bzw. das Gegenelement vor Korrosion schützend aufnimmt. Der Magnet und das Gegenelement sind vollständig eingekapselt, wobei die Verkapselungen außenseitig bündig zur entsprechenden Bodenfläche wie der des Modellsockels bzw. Gipssockels verlaufen kann. Nach dem Einartikulieren und Bearbeiten des Modells kann sodann durch Entfernen des jeweiligen Deckels der Magnet bzw. das Gegenelement problemlos entfernt werden, so dass ohne Beschädigung des Modells dieses archiviert werden kann. Auch ist ein problemloses Recyceln der Materialien möglich, da der Kunststoff zu eine Beschädigung von benutzten Mahlwerken nicht führen kann.

Durch den erfindungsgemäßen Vorschlag, dass zumindest eine der Verkapselungen, vorzugsweise beide Verkapselungen, ein austauschbares Deckelteil aufweisen, ergibt sich der Vorteil, dass nach dem Abbinden des Gipses oder sonstigem geeigneten Material die Verkapselung sockel- bzw. modellaußenseitig versetzt zu der entsprechenden Fläche verläuft, so dass die Verkapselungen selbst ein planes Aufliegen von Sockel und Modell nicht verhindern. Ungeachtet dessen ist die Haltekraft des Magneten hinreichend stark, um ein sicheres Fixieren des Modells an dem Sockel zu gewährleisten. Nachdem der Gips abgebunden ist, kann selbstverständlich der Magnet bzw. das Gegenelement auch ohne die Aufnahme verschließendes Deckelteil fixiert werden, nämlich dann, wenn der Magnet und/oder das Gegenelement durch Haftreibung in der jeweiligen Aufnahme verharren.

In Weiterbildung der Erfindung ist vorgesehen, dass die Aufnahme des Magneten eine bereichsweise flanschartig ausgebildete Bodenwandung aufweist. Hierdurch ist ein Vergießen der Aufnahme in dem Modell bzw. den Sockel möglich, ohne dass die Gefahr eines unkontrollierten Entfernens besteht.

Von der Bodenwandung selbst können den Magneten klemmend haltende Stege ausgehen. Hierdurch ist ein einfaches Fixieren des Magneten möglich, ohne dass das Entfernen des Magneten vor dem Archivieren des Modells Probleme bereitet. Selbstverständlich besteht auch die Möglichkeit, den Magneten beweglich in der Verkapselung anzuordnen, sofern Aufnahme und Deckelteil nicht unkontrolliert voneinander lösbar sind.

Das Deckelelement kann aus einer einen Hohlzylinder bildenden Seitenwandung und einer vorzugsweise über diese umfangsseitig vorstehende Bodenwandung bestehen. Der flanschartige Rand der Bodenwandung ermöglicht sodann ein einfaches Entfernen von der Aufnahme und damit Zugänglichmachen des Magneten.

Aufnahme und Deckel sind in ihrer Geometrie derart aufeinander abgestimmt, dass die Seitenwandung bei verkapseltem Magneten innerhalb der Aufnahme verläuft und zumindest bereichsweise flächig an dessen Seitenwandung anliegt. Hierdurch erfolgt eine haftende Sicherung von Aufnahme und Deckelelementen zueinander. Sofern die aufeinanderliegenden Seitenwandungen hinreichend durch Haftreibung gesichert sind, bedarf es zusätzlicher Maßnahmen nicht.

Alternativ kann die Aufnahme und/oder das Deckelelement aus einer Bodenwandung und einer eine Hohlzylinderform aufweisenden Seitenwandung bestehen, wobei die Seitenwandung des Deckelelementes innerhalb der Aufnahme verläuft und an dessen Seitenwandung zumindest bereichsweise flächig anliegt. Dabei können die Seitenwandungen der Aufnahme und des Deckelelementes eine gleiche Höhe aufweisen. Dies ist jedoch kein zwingendes Merkmal.

Ferner kann zumindest die Seitenwandung des Deckelelementes innen- und/oder außenseitig eine das Festklemmen des Magneten sichernde Strukturierung aufweisen. Vorzugsweise ist dabei vorgesehen, dass die Seitenwandung zumindest innenseitig radial verlaufende Vorsprünge wie Rippen aufweist.

Das Gegenelement wie Konterscheibe oder -ring kann in einer ein Deckelelement und ein in dem Sockel bzw. dem Modell eingießbaren Aufnahmeelement umfassenden Verkapselung angeordnet sein, wobei sowohl das Deckelelement als auch das Aufnahmeelement vorzugsweise im Schnitt eine hutförmige Geometrie mit jeweils zumindest bereichsweise flanschartig ausgebildeter Bodenwandung bestehen. Die jeweiligen Seitenwandungen können gleiche Höhen aufweisen, wobei die Seitenwandung des Deckelelementes bei verkapseltem Gegenelement innerhalb des Aufnahmeelementes verläuft und vorzugsweise flächig innenseitig an der Seitenwandung des Aufnahmeelementes anliegt.

Zum Sichern des Gegenelementes innerhalb der Verkapselung ist ersteres von dem Deckelelement klemmend gehalten. Hierzu kann die Seitenwandung eine entsprechende Strukturierung aufweisen. Vorzugsweise ist vorgesehen, dass die Seitenwandung des Deckelelementes zumindest innenseitig radial verlaufende Vorsprünge wie Rippen aufweist. Andere Maßnahmen zum Halten des Deckelelementes in der Aufnahme, insbesondere durch Haftreibung sind gleichfalls möglich.

Um eine hinreichende Stabilität der jeweiligen Verkapselung sicherzustellen, sollten über jeweilige Seitenwandungen vorstehende Bodenwandbereiche der Aufnahme bzw. des Aufnahmeteils für den Magneten bzw. das Gegenelement axial verlaufende Versteifungsstege ausgehen.

Die aus Kunststoff bestehende Verkapselung sollte aus einem Material bestehen, das zumindest bei 90 °C über zumindest einen Zeitraum von in etwa 10 Minuten formstabil ist.

Ferner zeichnet sich die Erfindung durch ein Haftsystem zum lösbaren Verbinden bzw. Fixieren von zahntechnischen Gipssockeln insbesondere zum Einartikulieren eines Modells an einem Sockel aus, welches dadurch gekennzeichnet ist, dass ein von einer ersten Verkapselung umschlossener und in dieser lösbar angeordneter Magnet in dem Sockel und ein von einer zweiten Verkapselung umschlossenes und lösbar in dieser angeordnetes Gegenelement in dem Modell anordbar ist, wobei jede Verkapselung beim Vergießen außenseitig fluchtend zur sockelseitigen Außenfläche des Modells bzw. modellseitigen Außenfläche des Sockels verläuft. Dabei ist erfindungsgemäß vorgesehen, dass nach dem Vergießen und dem Aushärten des Gipses zumindest ein Deckelteil einer Verkapselung durch ein weiteres Deckelteil austauschbar ist, dessen Außenfläche zurückversetzt zur Außenfläche des die Verkapselung aufnehmenden Gipssockels verläuft.

Eine Sockelplatte insbesondere zur Ausbildung eines Modells mit einem Magnethaftsystem zuvor beschriebener Art zeichnet sich dadurch aus, dass die Sockelplatte einen in etwa dem Verlauf des Zahnkranzes entsprechende Vertiefung aufweist, oberhalb und/oder innerhalb der zumindest einige der Modellstifte bei auf der Sockelplatte abgestütztem Zahnkranz verlaufen, und dass die Vertiefung mit einem Wachs oder wachsartigem Material ausgefüllt ist und/oder über der Vertiefung ein Wachs oder wachsartiges Material vorsteht.

Bei dem Wachs oder wachsartigen Material handelt es sich um natürliche oder synthetische kristalline Stoffe, die insbesondere in der Zahntechnik Verwendung finden und in der Regel bei 20 °C knetbar und über 40 °C in eine relativ niedrig viskose Schmelze übergehen. Insbesondere können Wachse bzw, wachsartige Materialien in Form von einfachen Lipoiden zum Einsatz gelangen. Hierdurch erfolgt jedoch keine Beschränkung der Erfindung. Vielmehr sind alle solche Materialien geeignet, die problemlos von den Sockelstiften lösbar sind, ohne dass es einer mechanischen Bearbeitung im eigentlichen Sinne bedarf.

Insbesondere zeichnet sich die Erfindung dadurch aus, dass in von der Sockelplatte aufgespannter Fläche verlaufender Ebene der Vertiefung ein gegen Eindrücken der Modellstifte einen Widerstand bildendes Material wie Metall oder Metallfolie (Träger) verläuft. Hierdurch ist sichergestellt, dass - wie bei den Sockelplatten nach dem Stand der Technik - die Modellstifte (Pins) sich auf einer von der Sockelplattenoberfläche gebildeten Ebene abstützen.

Losgelöst hiervon sollte der formbare Einsatz vertiefungsbodenseitig ein sich von der Sockelpaltte gut lösendes Material wie Folie als Trägerschicht aufweisen, so dass ein problemloses Entfernen, also ein Lösen als Einheit sowohl aus der Sockelplatte als auch aus der von dem Einsatz umgebenden Vertiefung des sich nach dem Ausgießen des Zwischenraums zwischen Sägemodell und Sockelplatte ausgebildeten Modellsockels möglich ist.

In hervorzuhebender Ausgestaltung der Erfindung ist vorgesehen, dass die Vertiefung einen Verlauf derart aufweist, der ermittelten üblichen Anordnungen von Modellstiften in Sägemodellen entspricht. Hierdurch erfolgt eine Normierung, die sicherstellt, dass weitgehend sämtliche Modellstifte im Bereich der Vertiefung, d.h. in Projektion oberhalb dieser verlaufen und somit beim Ausbilden des Modellsockels innerhalb des Wachses bzw, wachsartigen Materials verlaufen. Sollten sich einige Modellstifie außerhalb des Wachsmaterials befinden, so werden diese bei der Herstellung des Modellsockels in Gips eingebettet, so dass in gewohnter Weise ein Freibohren notwendig ist.

Des Weiteren ist vorgesehen, dass nach Lösen des Sägemodells von der Sockelplatte auf die freiliegenden Enden der Modellstifte ein insbesondere dem Aufbau oder der Geometrie des Einsatzes entsprechender Aufsatz anordbar ist, wobei die freiliegenden Enden in dem Wachs bzw. dem wachsartigen Material verlaufen. Durch diese Maßnahme ist sichergestellt, dass beim Eingipsen des Modells in einem Artikulator die Modellstifte ebenfalls nicht eingegipst werden können, wodurch sich ansonsten erneut die dem Stand der Technik immanenten Nachteile ergeben würden.

Weitere Einzelheiten, Vorteile und Merkmale der Erfindung ergeben sich nicht nur aus den Ansprüchen. den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine Prinzipdarstellung eines Artikulators,
- Fig. 2: eine Schnittdarstellung einer ersten Ausführungsform einer Verkapselung für einen Magneten,
- Fig. 3: eine Schnittdarstellung einer ersten Ausführungsform einer Verkapselung für eine Metallplatte,
- Fig. 4: eine Schnittdarstellung durch eine zweite Ausführungsform einer Verkapselung für einen Magneten,
- Fig. 5: eine Schnittdarstellung einer zweiten Ausführungsform einer Verkapselung für eine Metallscheibe,
- Fig. 6: eine Draufsicht auf eine Sockelplatte,
- Fig. 7: einen Schnitt durch eine Sockelplatte mit auf dieser angeordnetem Modell und
- Fig. 8: eine Detaildarstellung der Sockelplatte nach Fig. 6.

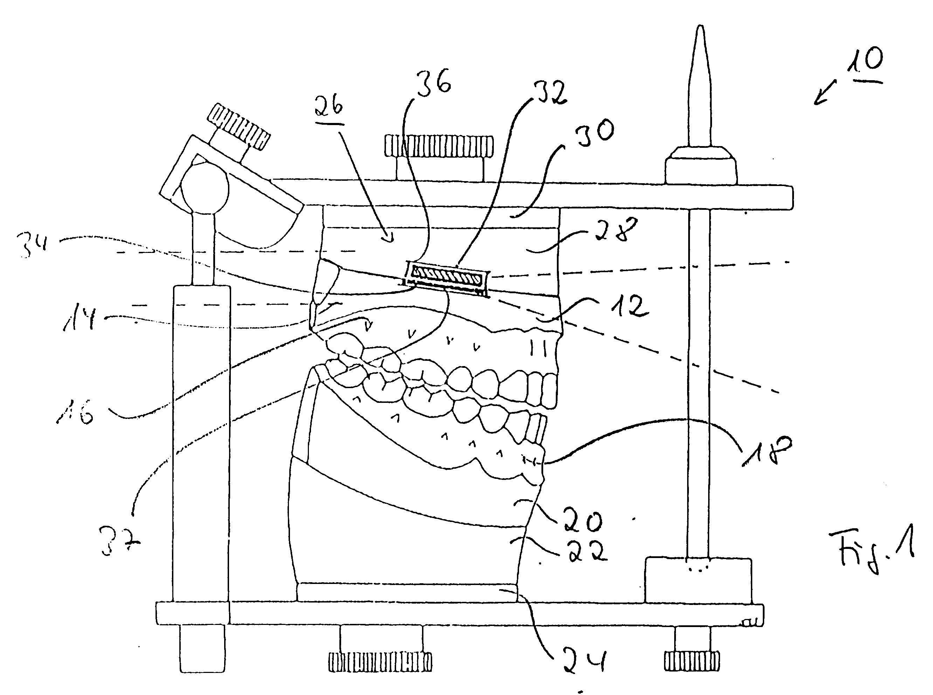

In Fig. 1 ist rein prinzipiell ein Artikulator 10 bekannter Konstruktion dargestellt, mit Hilfe dessen ein Modell 12 einartikuliert wird. Das Modell 12 besteht im eigentlichen Sinne aus einem Modellsockel 14 und einem Sägemodell 16. Gegenüberliegend ist ein Gegenbiss 18 mit Modellsockel 20, Gipssockel 22 und Artikulationsplatte 24 angeordnet.

Das Modell 12 selbst ist mittels einer Magnethalterung 26 mit einem Gipssockel 28 bzw. einer Artikulationsplatte 30 verbunden.

Die Magnethalterung 26 besteht aus einem Magneten 32 und einem in dem Sockel 14 vorhandenen Gegenelement in Form z.B. einer Konterscheibe 34. Diese wird nachstehend aus Gründen der Vereinfachung stets als Metallplatte bezeichnet. Sowohl der Magnet 32 als auch die Metallplatte 34 sind erfindungsgemäß in einer aus Kunststoff bestehenden Verkapselung 36 bzw. 37 angeordnet, um auf diese Weise ein einfaches Entfernen des Magneten 32 bzw. der Metallplatte 34 nach Bearbeitung des Modells 12 und vor dessen Archivieren zu ermöglichen. Selbstverständlich können Magnet und Gegenelement, welches gegebenenfalls auch ein Magnet sein kann, auch umgekehrt angeordnet werden.

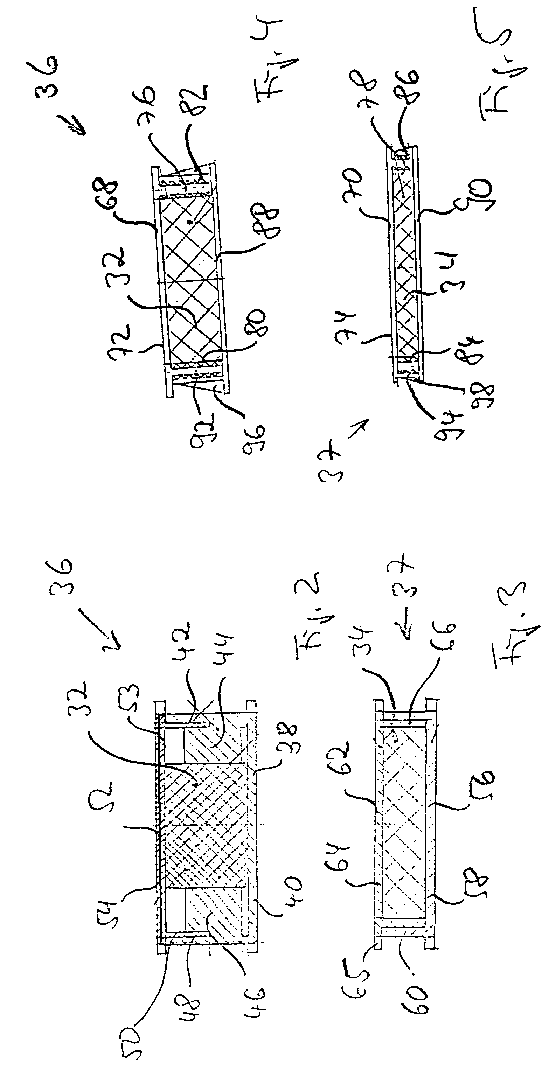

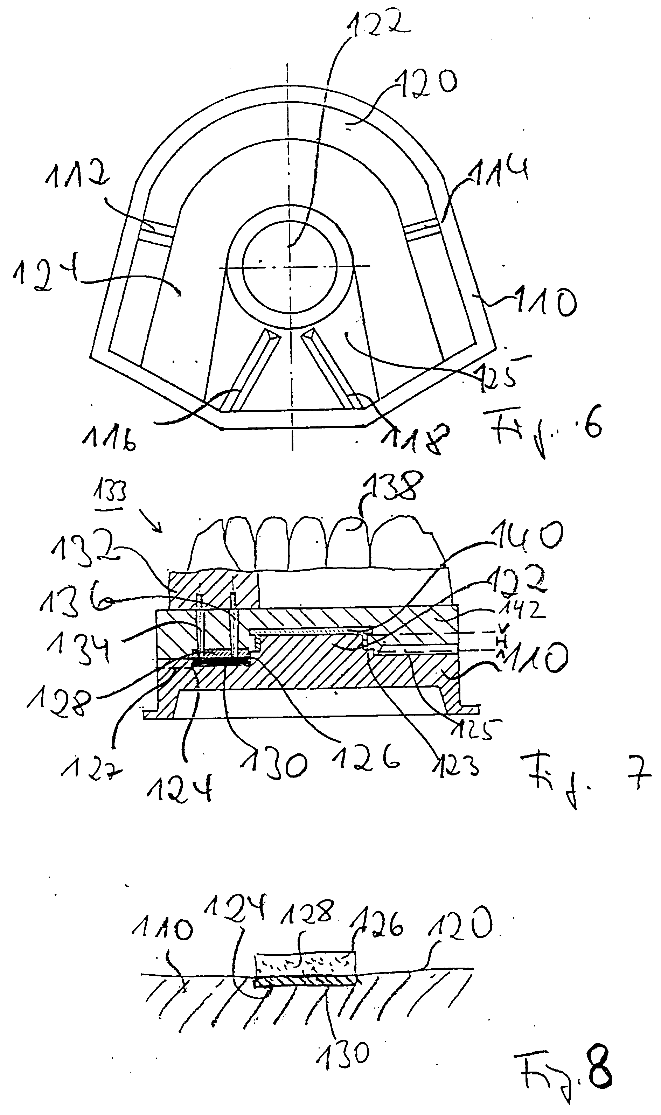

Den Fig. 2 und 3 ist eine erste Ausführungsform einer Verkapselung des Magneten 32 sowie der Metallplatte 34 zu entnehmen.

Nach der Fig. 2 ist der Magnet 32 in einer in dem Gipssockel 28 eingießbaren Aufnahme 38 festgeklemmt, die aus einer Bodenwandung 40 und einer Seitenwandung 42 besteht. Das Einklemmen ist jedoch kein zwingendes Merkmal. Vielmehr kann der Magnet 32 auch beweglich wie verschiebbar in der Verkapselung angeordnet sein.

Im Ausführungsbeispiel gehen von der Bodenwandung 40 Klemmstege 44, 46 aus, durch die der Magnet 32 festgeklemmt werden kann. Die Klemmstege 44, 46 sind durch axial verlaufende Schlitze voneinander getrennt. Ferner weisen die Klemmstege 44, 46 in Bezug auf die Seitenwandung 42 jeweils eine insgesamt auf einem Ring liegende Aussparung 48 auf, in die eine eine Hohlzylinderform bildende Seitenwandung 50 eines Deckelelementes 52 einbringbar ist, welches seinerseits eine Bodenwandung 54 aufweist, die - wie die Bodenwandung 40 der Aufnahme 38 - seitlich über die jeweilige Seitenwandung 42 bzw. 50 vorsteht.

Mit anderen Worten weist das Deckelelement 52 eine hutförmige Geometrie auf, wobei die seitlich vorstehenden Randabschnitte es ermöglichen, das Deckelelement 52 problemlos zu entfernen, um so den Magneten 32 aus der Aufnahme 38 herausnehmen zu können.

Die außenrandseitig einen umlaufenden Flansch aufweisende Bodenwandung 40 ist problemlos in dem Gipssockel 28 einbringbar wie eingießbar und in diesem fixierbar, da erwähntermaßen die Bodenwandung 40 außenrandseitig über die Seitenwandung 48 vorsteht.

Die Verkapselung 37 der Metallplatte 34 besteht aus einem in dem Modellsockel 12 einbringbaren wie eingießbaren Aufnahmeteil 56, der eine hutförmige Geometrie mit einer Bodenwandung 58 und in Bezug auf deren Außenrand zurückversetzten eine Hohlzylinderform bildenden Seitenwandung 60 besteht. Das Aufnahmeteil 56 ist mittels eines Deckelteils 62 verschließbar, um das Metallteil 34 zu verkapseln. Das Deckelteil 62 weist eine Geometrie auf, die der des Aufnahmeteils 56 entspricht. Folglich weist dessen Bodenwandung 64 einen umfangsseitig vorstehenden Randbereich 65 auf, um problemlos das Deckelelement 62 von dem Aufnahmeteil 56 zum Entfernen der Metallplatte 34 zu lösen.

Das Deckelteil 62 verläuft mit seiner eine Hohlzylinderform bildenden Seitenwandung 66 innerhalb des Aufnahmeteils 56, wobei die Seitenwandungen 60, 66 zumindest bereichsweise flächig aneinanderliegen. Die Höhe der jeweiligen Seitenwandung 60 bzw. 66 ist in etwa gleich. Durch das Anliegen der Seitenwandungen 60, 66 ist eine gewünschte Haftreibung erzielbar, die ein sicheres Fixieren des Deckelteils 62 in dem Aufnahmeteil 56 gewährleistet. Gleiche konstruktive Möglichkeiten bestehen bei der Verkapselung für den Magneten 32.

Wird bei der Verkapselung des Magneten 32 dieser von der Aufnahme 38 gehalten, so wird die Metallplatte 34 von dem Deckel element 62 aufgenommen.

Die den Fig. 4 und 5 zu entnehmenden Verkapselungen 36 bzw. 37 unterscheiden sich von denen der Fig. 2 und 3 dahingehend, als dass sowohl der Magnet 32 als auch die Metallplatte 34 von einem Deckelelement 68 bzw. 70 klemmend aufgenommen ist. Jedes Deckelelement 68, 70 weist eine hutartige Geometrie. also eine einen umlaufenden Flansch aufweisende Bodenwandung 72 bzw. 74 sowie von dieser ausgehende eine Hohlzylinderform bildende Seitenwandung 76 bzw. 78 auf, die ihrerseits - im Ausführungsbeispiel innen- und außenseitig - radial verlaufende Rippen 80, 82 bzw. 84, 86 aufweist. Hierdurch ist ein sicheres Fixieren des Magneten 32 bzw. der Metallplatte 34 sichergestellt. Selbstverständlich ist es nicht erforderlich, dass die Seitenwandung 76 bzw. 78 außenseitig strukturiert ist. Vielmehr reicht es aus, wenn die Seitenwandung 76, 78 innenseitige Vorsprünge wie insbesondere Rippen oder gegebenenfalls Noppen aufweist, über die der Magnet 32 bzw. die Metallplatte 34 gehalten wird.

Die dem Deckelelement 68 bzw. 70 zugeordnete und in dem Modellsockel 12 bzw. Gipssockel 28 einbringbare wie eingießbare Aufnahme 88 bzw. 90 weist ebenfalls jeweils eine hutförmige Geometrie auf. Die Höhe der jeweiligen eine Hohlzylinderform bildenden Seitenwandung 92 bzw. 94 entspricht in etwa der der Seitenwandung 76 bzw. 78 des Deckelteils 68 bzw. 70.

Zur Erhöhung der Stabilität der Aufnahme 88, 90 können entlang der Außenfläche der Seitenwandungen 92, 94 Versteifungsstege 96, 98 verlaufen, die vom über die Seitenwandung 92, 94 vorstehendem Randbereich der Bodenwandung ausgehen.

Als Materialien für die Verkapselung 36, 37 sollte ein Kunststoff benutzt werden, der zumindest bei 90 °C über einen Zeitraum von in etwa 10 Minuten formstabil ist.

Ist im Ausführungsbeispiel allein der Modellsockel 12 mit dem Gipssockel 78 über den verkapselten Magnet 32 und der ebenfalls verkapselten Metallplatte 34 gehalten und lagefixiert, so kann eine entsprechende Halterung selbstverständlich auch zwischen den anderen austauschbaren Elementen wie Gegenbiss 18 und Gipssockel 22 bzw. diesem und der Artikulatorplatte 24 vorgesehen sein. Gleiches gilt in Bezug auf den Gipssockel 28 und der Artikulatorplatte 30.

Zu erwähnen ist noch. dass die Aufnahme- bzw. Deckelelemente umfangsseitig jeweils zumindest eine Einkerbung und/oder einen Vorsprung als Verdrehsicherung innerhalb der Gipsmasse aufweisen.

Ferner ist darauf hinzuweisen, dass durch das leichte Herausnehmen des Magneten ohne mechanische Belastung (Ausklopfen aus Gips etc.), die Haftkraft des Magneten nicht vermindert wird.

In Fig. 6 ist rein prinzipiell eine Draufsicht einer Sockelplatte 110 dargestellt, wie diese zur Herstellung von Zahnersatz benutzt wird und zur Herstellung eines Modells dient. Die Sockelplatte 110 weist in gewohnter Weise Vertiefungen 112, 114 bzw. Erhebungen 116, 118 auf, um bei späterer Handhabung positionsgenau angeordnet zu werden.

Im Bereich der Sockelplatte 110 geht von dessen modellseitiger Fläche 120 ein ring- oder zylinderförmiger Vorsprung 122 aus, der die Negativform einer Aufnahme eines Magneten 32 oder eines Gegenelementes 34 aufweist, wie diese zuvor beschrieben ist. Dabei weist der Vorsprung eine Höhe H auf, die der Höhe der Seitenwandung der Aufnahme oder Kappe 140 für den Magneten 32 bzw. das Gegenelement 34 entspricht. Der Vorsprung 122 endet auf einem Absatz 123, der gegenüber der den Vorsprung 122 umgebenen Fläche 125 der Sockelplatte 110 einen Abstand aufweist, der gleich der Dicke der Bodenwandung eines die auf dem Vorsprung 122 aufsetzbare Aufnahme verschließenden Deckelteils entsprechend zuvor wiedergegebener Charakterisierung ist. Hierdurch ist sichergesellt, dass das Deckelteil außenseitig bei fertiggestelltem Modell fluchtend zu dessen Außenfläche verläuft. Ein späterer Austausch des Deckelteils kann in nachstehend beschriebener Weise erfolgen.

Von der Oberfläche 120 ausgehend verläuft in der Fig. 6 in der Sockelplatte 110 eine U-förmige Vertiefung oder Nut 124, die dem Verlauf üblicher Zahnkränze oder Sägemodelle entspricht, und zwar in Bezug auf die von diesen ausgehenden Sockelstiften. Dabei kann die Vertiefung oder Nut 124 auch als Stufe ausgebildet sein, die sich bis zum Rand der Sockelplatte 110 fortsetzt. Dies wird durch die Linie 127 in Fig. 7 angedeutet. Aus Gründen der Vereinfachung wird jedoch nachstehend von Nut bzw. Vertiefung gesprochen.

In die Nut oder Vertiefung 124 wird vor Ausbildung des Modells sodann ein Einsatz 26 eingebracht, der zumindest abschnittsweise, im Ausführungsbeispiel der Fig. 8 mit einem im Schnitt rechteckförmigen Abschnitt 128 über der Oberfläche 120 der Sockelplatte 110 vorsteht. Der Bereich 128 besteht dabei aus Wachs oder wachsartigem Material, wie dieses in der Zahntechnik zum Einsatz gelangt. Ist eine Stufe vorhanden, so wird auf diese ein entsprechend geformtes Element, das dem Einsatz in seinen Eigenschaften und Funktionen entspricht, positioniert.

Unterseitig weist der Einsatz 126 einen als Träger 130 bzw. ein Trägermaterial aus einem festeren Material auf. Die Dicke des Trägers 130 kann dabei so gewählt werden, dass die Oberfläche des Materials 130 in oder in etwa in der Ebene verläuft, die von der Oberfläche 120 der Sockelplatte 110 aufgespannt wird. Dies ist jedoch kein zwingendes Merkmal. Vielmehr kann der Einsatz 126 vollständig aus Wachs oder wachsartigem Material bestehen oder nur aufnahmebodenseitig eine Folie aufweisen, die sicherstellt, dass nach Ausbilden eines Modells der Einsatz 126 problemlos entfernt werden kann.

Zur Ausbildung eines Sägemodells (133) wird ein Zahnkranz 132 auf die Sockelplatte 110 aufgesetzt, und zwar über Modellstifte 134, 136, die unterhalb von Zähnen bzw. Zahnstümpfen 138 verlaufen. Die freien Enden der Modellstifte 134, 136 befinden sich im Bereich des Einsatzes 126, so dass deren Enden von dem Wachs bzw. wachsartigen Material des Abschnitts 128 des Einsatzes 126 umgeben sind. Sofern entsprechend dem Ausführungsbeispiel der Fig. 3 der Einsatz 126 einen unterseitigen Träger 130 härteren Materials aufweist, der bis zur Oberfläche 120 der Sockelplatte 110 reicht, erfolgt ein Positionieren des Zahnkranzes 132 nach dem Stand der Technik.

Vor Aufbringen des Zahnkranzes 132 auf die Sockelplatte 110 wird auf den Vorsprung 122 die Kappe 140 angeordnet, die zur Aufnahme eines Magneten 32 bzw. eines Gegenelementes 34 bestimmt ist. Die Kappe 140 entspricht der Funktion nach einer Aufnahme der Fig. 1 - 5.

Sodann wird der Raum zwischen dem Zahnkranz 132 und der Sockelplatte 110 in gewohnter Weise mit Gips zur Bildung eines Modellsockels 142 ausgefüllt. Nach Aushärten des Gipses wird sodann der Zahnkranz 132 zusammen mit dem ausgehärteten Modellsockel 142 als Sägemodell 133 von der Sockelplatte 110 entfernt.

Da sich die freien Enden der Modellstifte 134, 136 innerhalb der Wachsschicht 126 beim Ausbilden des Modellsockels 142 befinden und das Wachsmatrial problemlos entfernbar ist, wird das nach dem Stand der Technik notwendige Freibohren nicht erforderlich.

Wird ein so hergestelltes Modell sodann in einen Artikulator eingebracht, also über Artikulationsgips in gewohnter Weise ausgerichtet und mittels Magnethalterungen fixiert, so wird auf die freien Enden der Modellstifte 134, 136 ein wachsartiger Aufsatz aufgebracht, der dem Aufbau der Geometrie des Einsatzes 126 entsprechen kann. Folglich ist nach dem Entfernen des Modells von dem Artikulationsgips ebenfalls ein Freibohren der Metallstifte 134, 136 nicht erforderlich. Vielmehr sind die freien Enden der Modellstifte 134, 136 frei zugänglich, so dass problemlos Zähne bzw. Zahnstümpfe mittels der Modellstifte 134, 136 aus dem Sägemodell 132 herausgedrückt werden können.

Die erfindungsgemäße Haftanordnung wird wie folgt benutzt. Nachdem auf den Vorsprung 122 die Kappe 140 aufgesetzt und der Zahnkranz 132 auf der Sockelplatte 110 angeordnet sind, erfolgt in gewohnter Weise ein Ausfüllen mit Gips. Nach dem Abbinden des Gipses steht ein Modell 133 zur Verfügung, in dem bodenseitig die Kappe 40 frei zugänglich ist, um einen Magneten 32 oder ein Gegenelement 34 einzubringen. Sodann wird die Kappe 140 mit einem Deckelelement zuvor beschriebener Art verschlossen. Durch die Stufe 123 in der Sockelplatte 110 besteht ein Freiraum zwischen freiem umlaufendem Rand der Seitenwandung der Kappe 140 und der planen Außenfläche des Modells, so dass die Kappe 140 mit einem Deckelelement zuvor beschriebener Art verschließbar und somit der Magnet bzw. das Gegenelement gesichert werden kann. Die Ausbildung der Stufe 123 ist dabei dergestalt, dass diese auf die Stärke des Bodenteils - z. B. der Bodenwandung 52 des Deckelelements 54 - angepasst ist, so dass dieses außenseitig fluchtend zur Bodenfläche des Modells verläuft. Anschließend wird eine Verkapselung für das Gegenelement auf die dem Magneten umschließende Verkapselung gesetzt und durch die Magnetkraft fixiert. Sodann erfolgt ein Sockeln des Modells 12 in dem Artikulator 10 gemäß Fig. 1 in gewohnter Weise. Hierzu wird auf die Bodenfläche des Modells 12 Gips aufgebracht, um diesen nach dem Einartikulieren des Modells 12 zwischen diesem und der Artikulatorplatte 30 zu verteilen und die erforderliche Verbindung und den notwendigen Abstand sicherzustellen. Zuvor wird auf die Bodenfläche des Modells in gewohnter Weise ein Trennmittel aufgebracht, um das Modell von der Sockelplatte 28 trennen zu können.

Nachdem der Gips abgebunden ist, werden vorzugsweise die jeweiligen Deckelteile 52 bzw. 62 entfernt und durch andere Deckelteile ersetzt, deren Bodenwandungen eine geringe Stärke aufweisen. Auch ist ein flanschartiger Rand nicht erforderlich. Ein entsprechendes Deckelteil ist in Fig. 2 eingezeichnet und mit dem Bezugszeichen 53 versehen. Nach Verschließen der Aufnahmen oder Kappen, innerhalb der der Magnet bzw. das Gegenelement angeordnet sind, mit dem neuen Deckelteil, verlaufen dessen Außenflächen zur jeweiligen Außenfläche des Modells 28 bzw. des Gipssockels 28 zurückversetzt. Hierdurch wird sichergestellt, dass die Verkapselungen 36, 37 ein planes Anliegen der Flächen von Modellsockel 12 und Gipssockel 28 nicht behindern.

Es besteht auch ohne Weiteres die Möglichkeit, dass der Magnet bzw. das Gegenelement nach dem Abbinden des Gipses, also dessen Aushärten nicht von einem Deckelelement verschlossen werden. Hierzu ist es jedoch erforderlich, dass der Magnet bzw. das Gegenelement in der Aufnahme durch z. B. Klemmen in hinreichendem Umfang fixiert sind.

## Patentansprüche

1. Anordnung zum lösbaren Verbinden bzw. Fixieren von zahntechnischen Gipssockeln (12, 28), insbesondere zum Einartikulieren eines Modells, wobei in sockelseitiger Fläche des Modells ein Magnet (32) und in modellseitiger Fläche des Sockels ein von dem Magneten gehaltenes Gegenelement (34) wie Konterscheibe oder -ring oder zweiter Magnet anordbar sind oder umgekehrt,
**dadurch gekennzeichnet,**
dass der Magnet (32) und/oder das Gegenelement (34) entfernbar in einer aus Kunststoff bestehenden Verkapselung (36, 37) angeordnet sind.

2. Anordnung nach Anspruch 1,
**dadurch gekennzeichnet,**
dass der Magnet (32) in einer im Schnitt vorzugsweise ein Hutprofil aufweisenden Aufnahme (38) angeordnet wie festklemmbar ist, die mit einem ersten Deckelelement (52) vorzugsweise durch Haftreibung verschließbar ist, dass das erste Deckelelement nach dem Einartikulieren der Gipssockel (12, 28) durch ein zweites Deckelelement austauschbar ist, dass das zweite Deckelelement mit seiner Außenfläche zurückversetzt zur Außenfläche des das zweite Deckelelement aufnehmenden Gipssockels verläuft.

3. Anordnung nach Anspruch 1 oder 2,
**dadurch gekennzeichnet,**
dass das Deckelelement (52) der den Magneten (32) aufnehmenden Verkapselung (36) eine einen Hohlzylinder bildende Seitenwandung (50) und eine vorzugsweise über diese seitlich vorstehende Bodenwandung (54) aufweist, wobei insbesondere die Seitenwandung bei verkapselten Magneten innerhalb der Aufnahme (38) verläuft und bereichsweise flächig an deren Seitenwandung (42) anliegt.

4. Anordnung nach zumindest einem der vorhergehenden Ansprüche,
**dadurch gekennzeichnet,**
dass das Gegenelement (34) wie Konterscheibe oder -ring oder zweiter Magnet in der ein Deckelelement (62) und ein in dem Sockel (28) bzw. dem Modell (12) eingießbares Aufnahmeelement (56) umfassenden Verkapselung (37) angeordnet ist und dass vorzugsweise das Deckelelement nach dem Einartikulieren der Gipssockel (12, 28) durch ein weiteres Deckelelement austauschbar ist, dessen Außenfläche zurückversetzt zur Außenfläche des das Deckelelement aufnehmenden Gipssockels verläuft.

5. Anordnung nach zumindest einem der vorhergehenden Ansprüche,
**dadurch gekennzeichnet,**
dass das Deckelelement (52, 62) der Verkapselung (36, 37) während des Einartikulierens der Gipssockel (12, 28) und des Aushärtens des Gipses mit ihren Außenflächen fluchtend zur jeweiligen Außenfläche des aufnehmenden Gipssockels verläuft.

6. Anordnung nach zumindest einem der vorhergehenden Ansprüche,
**dadurch gekennzeichnet,**
dass das Deckelelement (62) und/oder das Aufnahmeelement (56) der das Gegenelement (34) aufnehmenden Verkapselung in Bezug auf die jeweilige Bodenwandung (58, 64) zumindest abschnittsweise flanschartig ausgebildet.

7. Anordnung nach zumindest einem der vorhergehenden Ansprüche,
**dadurch gekennzeichnet,**
dass die Verkapselung (36) für den Magneten (32) aus einer Aufnahme und einem Deckelelement (68) mit jeweils einer Bodenwandung (68, 88) und einer eine Hohlzylinderform aufweisenden Seitenwandung (76, 92) besteht, wobei die Seitenwandung (76) des Deckelelementes sich innerhalb des Aufnahmeteils erstreckt und vorzugsweise zur Erzielung einer Haftreibung bereichsweise flächig an dessen Seitenwandung anliegt.

8. Anordnung nach zumindest einem der vorhergehenden Ansprüche,
**dadurch gekennzeichnet,**
dass die jeweilige Verkapselung (36, 37) aus Kunststoff besteht, der zumindest bei 90° C über zumindest einen Zeitraum von in etwa 10 Minuten formstabil ist und dass vorzugsweise die jeweilige Verkapselung (36, 37) bzw. deren Teile umfangsseitig zumindest eine Einkerbung und/oder einen Vorsprung als Verdrehsicherung aufweisen.

9. Haftsystem (32, 34, 36, 37) zum lösbaren Verbinden bzw. Fixieren von zahntechnischen Gipssockeln (12, 28, insbesondere zum Einartikulieren eines Modells (12, 14) an einem Sockel (28),
**dadurch gekennzeichnet,**
dass ein von einer ersten Verkapselung (36) umschlossener und in dieser lösbar angeordneter Magnet (32) in dem Sockel (28) und ein von einer zweiten Verkapselung (37) umschlossenes und lösbar in dieser angeordnetes Gegenelement (34) in dem Modell (12, 14) anordbar ist, wobei jede Verkapselung beim Vergießen außenseitig fluchtend zur sockelseitigen Außenfläche des Modells bzw. modellseitigen Außenfläche des Sockels verläuft.

10. Haftsystem nach Anspruch 9,
**dadurch gekennzeichnet,**
dass nach dem Vergießen und dem Aushärten des Gipses zumindest ein Deckelteil einer Verkapselung durch ein weiteres Deckelteil austauschbar ist, dessen Außenfläche zurückversetzt zur Außenfläche des die Verkapselung aufnehmenden Gipssockels verläuft.

11. Sockelplatte (110) zur Herstellung eines Sägemodells (133) bestehend aus einem Zahnkranz (132) und einem Modellsockel (142) mit von dem Zahnkranz ausgehenden und unterseitig über den Zahnkranz vor Ausbildung des Modellsockels vorstehenden Modellstiften (134, 136),
**dadurch gekennzeichnet,**
dass die Sockelplatte (110) eine in etwa dem Verlauf des Zahnkranzes (132) entsprechende Vertiefung (124) aufweist, oberhalb und/oder innerhalb der zumindest einige der Modellstifte bei auf der Sockelplatte abgestütztem Zahnkranz (132) verlaufen und dass die Vertiefung mit einem Wachs oder wachsartigem Material ausgefüllt ist und/oder über der Vertiefung ein Wachs oder wachsartiges Material vorsteht.

12. Sockelplatte nach Anspruch 11,
**dadurch gekennzeichnet,**
dass das Wachs bzw, wachsartige Material (128) ein Abschnitt eines Einsatzes (126) ist, der in die Vertiefung (124) wie Nut einbringbar ist, wobei insbesondere der vorzugsweise formbare Einsatz aus einer Trägerschicht (130) mit dem auf dieser aufgebrachtem Wachs bzw. wachsartigem Material besteht.

13. Sockelplatte nach Anspruch 11,
**dadurch gekennzeichnet,**
dass in der Vertiefung (124) in von der Sockelplatte (110) aufgespannter Oberfläche (120) ein gegen ein Eindrücken der Modellstifte (134, 136) einen Widerstand bildendes Material wie Metall oder Metallfolie verläuft.

14. Sockelplatte nach zumindest einem der vorhergehenden Ansprüche,
**dadurch gekennzeichnet,**
dass die Vertiefung (124) vollständig von der Trägerschicht bzw. einem Träger (130) ausgefüllt ist, auf dessen sägemodellseitiger Oberfläche die Modellstifte (134, 1 36) mit ihren freien Enden abstützbar sind.

15. Sockelplatte nach einem der vorhergehenden Ansprüche,
**dadurch gekennzeichnet,**
dass der Einsatz (126) vertiefungsbodenseitig ein sich von der Sockelplatte (110) gut lösendes Material wie Folie aufweist.

16. Sockelplatte nach einem der vorhergehenden Ansprüche,
**dadurch gekennzeichnet,**
dass nach Lösen des Sägemodells (142) von der Sockelplatte (110) auf die freien Enden der Modellstifte (134, 136) ein vorzugsweise dem Aufbau und der Geometrie des Einsatzes (126) entsprechender Aufsatz anordbar ist, wobei die freiliegenden Enden der Modellstifte (134, 136) in dem bzw. einem Wachs bzw. wachsartigen Material verlaufen.

17. Sockelplatte vorzugsweise nach zumindest Anspruch 9,
**dadurch gekennzeichnet,**
dass von der Sockelplatte (110) ein Vorsprung (122) abragt, dessen Geometrie der einer Aufnahme wie Kappe (140) für einen Magneten (32) bzw. ein Gegenelement (34) entspricht, dass der Vorsprung von einer Stufe (123) umgeben ist, dessen Höhe und Breite der eines flanschartigen Randes einer die Aufnahme bzw. Kappe verschließenden Deckelelements (152, 172) entspricht, und dass die Stufe in eine Fläche (125) der Sockelplatte übergeht, die zumindest abschnittsweise bodenseitige Begrenzung des in der Sockelplatte ausbildenden Modellsockels (112) bildet.
